# EUROPÄISCHE PATENTSCHRIFT

(11) **EP 1 504 954 B1**
(45) Veröffentlichungstag und Bekanntmachung des Hinweises auf die Patenterteilung: **25.04.2007**
(21) Anmeldenummer: 04018213.1
(22) Anmeldetag: 31.07.2004
(51) Int. Cl.: B60Q 1/04

(54) **Befestigungsvorrichtung für eine Leuchtenanordnung**
Fixation assembly for a lamp arrangement
Système de fixation pour un système d'éclairage

(30) Priorität: 06.08.2003 DE 10335878
(43) Veröffentlichungstag der Anmeldung: 09.02.2005
(73) Patentinhaber: GM Global Technology Operations, Inc., Detroit, MI 48265-3000 (US)
(72) Erfinder: Feid, Thomas, 68239 Mannheim (DE); Gottwald, Wolfgang, 23600 Martos (Jaen) (ES); Kathmann, Jörg, 64569 Nauheim (DE); Kistinger, Thomas, 64347 Griesheim (DE); Krieg, Gregor, 63303 Dreieich (DE); Reichmann, Karl-Heinz, 64589 Stockstadt (DE); Schneider, Ingolf, 65428 Rüsselsheim (DE)
(74) Vertreter: Daniel, Ulrich W.P.

(56) Entgegenhaltungen:
- DE-A1- 4 133 002
- DE-A1- 19 741 450
- DE-A1- 19 912 157
- DE-C1- 4 442 294
- FR-A- 2 710 592

## Beschreibung

Die vorliegende Erfindung betrifft eine Befestigungsvorrichtung zur Befestigung einer Leuchtenanordnung an einem Karosserieteil eines Kraftfahrzeugs sowie eine Leuchtenanordnung mit einer solchen Befestigungsvorrichtung.

Zum allgemeinen Hintergrund von Befestigungsvorrichtungen für ein Scheinwerfergehäuse an einer Karosserie eines Fahrzeugteiles im Allgemeinen und zum Justieren und Fixieren dieser Gehäuseteile im Speziellen wird auf die DE 199 12 157 A1, die DE 197 41 450 A1, die DE 198 35 047 A1, die DE 100 63 880 A1 sowie die DE 42 28 889 A1 verwiesen. In diesen Druckschriften sind Scheinwerfer beschrieben, deren Gehäuse bzw. Gehäusehalter direkt an einem Karosserieteil befestigt sind. Für die Befestigung werden sehr häufig Befestigungsschrauben verwendet, die ein Außengewinde zur längsverschieblichen Befestigung an einem eine Durchgangsbohrung aufweisenden Gegenstück oder Karosserieteil aufweisen. Typischerweise ist eines dieser Befestigungselemente zusätzlich als Justageelement ausgebildet.

Dokument DE 4133002 Offenbart eine Befestigungsvorrichtung zur Befestigung einer Leuchtenanordnung an einem Karosserieteil eines Kraftfahrzeugs,
mit einer Gehäusehalterung zum Halten und Ausrichten eines Gehäuses der Leuchtenanordnung,
mit mindestens einer Führungsschiene , die an dem Karosserieteil befestigt ist, an der die Gehäusehalterung befestigt und ausgerichtet ist.

Bei modernen Kraftfahrzeugen, bei denen die Scheinwerfer in der Karosserie eingebettet oder eingepasst sind, ist der minimale Fugenverlauf zwischen Scheinwerfer und Karosserie elementar wichtig, da bereits minimale Toleranzen im Fugenverlauf besonders deutlich sichtbar sind. Dies gilt es unter allen Umständen zu vermeiden. Aus diesem Grunde wird bei modernen Kraftfahrzeugen das Scheinwerfergehäuse direkt an der Karosserie bzw. dessen direkten Anbauteile verschraubt, um damit eine möglichst gute Passung und somit einen möglichst gleichmäßigen Fugenverlauf zu erhalten.

Aufgrund der sehr kompakten Bauweise moderner Kraftfahrzeuge gepaart mit einem optisch herausragenden, besonders markanten Design der Scheinwerferleuchten ist es sehr häufig nicht möglich, sämtliche Befestigungsvorrichtungen eines Scheinwerfers oder einer Leuchte direkt an der Karosserie des Kraftfahrzeuges zu befestigen. Typischerweise wird daher eine erste Befestigung des Scheinwerfergehäuses direkt an der Karosserie befestigt. Eine zweite Befestigung, die aus Stabilitätsgründen unbedingt erforderlich ist, wird dann an einer Führungsschiene befestigt, welche unmittelbar mit der Karosserie verbunden ist. Diese Führungsschiene kann beispielsweise Bestandteil eines ohnehin vorhandenen Stoßfängermoduls sein. Die Befestigung des typischerweise aus Kunststoff bestehenden Scheinwerfergehäuses und der Führungsschiene erfolgt über eine Kunststoffmutter, die an der Führungsschiene angebracht ist oder mit dieser verbunden ist. Befestigt wird dann mit einer in den Kunststoff dieser Mutter eindrehbaren, selbst schneidenden Stahl- oder Metallschraube.

Beim Einschrauben der selbst schneidenden Schraube in die Kunststoffmutter bzw. in eine entsprechende Bohrung der Führungsschiene kann es dazu kommen, dass das Loch im Scheinwerfergehäuse und das entsprechende Loch der Kunststoffmutter nicht exakt übereinander angeordnet sind, dass heißt die beiden Löcher fluchten nicht. Um dieses Problem zu beheben, müsste zumindest eines dieser Teile solange gegen das andere Teil verschoben werden, bis das Loch der Mutter mit dem Loch im Scheinwerfergehäuse exakt übereinander liegen. Anschließend kann dann die Metallschraube ordnungsgemäß in die Kunststoffmutter eingeschraubt werden. Üblicherweise wird dies aber bei einem automatisierten Herstellungsprozess nicht gemacht. Dadurch wird aber die Schraube nicht ordnungsgemäß, sondern schief, also nicht längsaxial in die Mutter, eingedreht. Außerdem kann es dadurch vorkommen, dass die Stahlschraube zusätzlich auch in das Material des Scheinwerfergehäuses eingedreht wird, wodurch das Scheinwerfergehäuse an den seitlichen Rändern des Durchstecklochs beschädigt wird. Alles in allem ist also das Durchsteckloch im Scheinwerfergehäuse und das Loch in der Einsteckmutter nicht fluchtend miteinander befestigt sind. Die bei einem ordnungsgemäßen Eindrehen der selbst schneidenden Schraube durch die Kunststoffmutter gewährleistete Passung des Scheinwerfers zum Kotflügel ist dann nicht mehr sicher gestellt. Dadurch verzieht sich das Scheinwerfergehäuse relativ zu der Karosserie. Ursache dafür ist, dass sich die selbst schneidende Metallschraube aufgrund des sehr viel härteren Materials auch bei nichtfluchtenden Löchern dennoch in das Material des Kunststoffs eindrehen lässt, allerdings mit der Folge, dass aufgrund der dann nicht mehr gleichmäßigen, am Gewinde der selbst schneidenden Schraube wirkenden Kräfte sich das Scheinwerfergehäuse relativ zu dem fixen Führungsteil bewegen kann. Dies führt unmittelbar dazu, dass ein ansonsten gleichmäßiger Fugenverlauf zwischen Scheinwerfer und Kotflügel nicht mehr vorliegt. Dies kann lediglich durch zeitaufwendiges und damit kostenintensives Nacharbeiten der Fugenverläufe behoben werden.

Der vorliegenden Erfindung liegt nun die Aufgabe zugrunde, auf herstellungstechnisch sehr einfache Weise einen möglichst gleichmäßigen Fugenverlauf zwischen Scheinwerfer und Karosserie zu gewährleisten. Eine weitere Aufgabe der vorliegenden Erfindung besteht darin, eine möglichst gute Positionierung und Fixierung des Scheinwerfergehäuses relativ zur Karosserie eines Kraftfahrzeuges zu gewährleisten.

Erfindungsgemäß wird diese Aufgabe durch eine Befestigungsvorrichtung mit den Merkmalen des Patentanspruchs 1 sowie eine Leuchtenanordnung mit den Merkmalen des Patenanspruchs 10 gelöst.

Demgemäß ist eine Befestigungsvorrichtung zur Befestigung einer Leuchtenanordnung an einem Karosserieteil eines Kraftfahrzeugs vorgesehen, mit einer Halterung zum Halten und Ausrichten eines Gehäuses der Leuchtenanordnung, mit mindestens einer Führungsschiene, die an dem Karosserieteil befestigt ist, an der die Halterung befestigt und ausgerichtet ist, mit mindestens einer Mutter und jeweils eine in das Material der Mutter selbst schneidende Schraube zur Befestigung der Halterung mit der Führungsschiene, mit mindestens einem an der Halterung oder an der Führungsschiene angeordneten Führungsstift und einem an der Führungsschiene bzw. der Gehäusehalterung vorgesehenen Führungsloch zum Einführen des Führungsstifts und zum gegenseitigen Ausrichtung von Mutter und Schraube. (Patentanspruch 1)

Ferner ist eine Leuchtenanordnung für oder in einem Kraftfahrzeug vorgesehen, mit mindestens einem Scheinwerfer und/oder einer Leuchte, die jeweils ein Gehäusehalterung aufweisen, mit mindestens einer erfindungsgemäßen Befestigungsvorrichtung, mit mindestens einer weiteren Befestigungsvorrichtung, mittels der die Gehäusehalterung direkt an einem Karoserieteil, insbesondere einem Kotflügel, und/oder einem Karoserieanbauteil, insbesondere einem Stossfänger, befestigt ist. (Patentanspruch 10)

Die der vorliegenden Erfindung zugrunde liegende Idee besteht darin, einen Führungsstift zur Justierung und zur Positionierung der selbst schneidenden Schraube auf ein Durchsteckloch und eine Kunststoffmutter vorzusehen. Dieser Führungsstift wird in eine dafür vorgesehene Ausnehmung eingeführt. Durch Verwendung eines Führungsstiftes lassen sich die Ausnehmung im Scheinwerfergehäuse und die Ausnehmung der Kunststoffmutter mit sehr engen Toleranzen passend übereinander bringen.

Bevor das Scheinwerfergehäuse befestigt wird, wird es über den am Scheinwerfergehäuse angeordneten Führungsstift an der gegenüberliegenden Führungsschiene bzw. dem Karosserieteil vorzentriert. Dadurch wird gewährleistet, dass das Loch im Scheinwerfergehäuse exakt mit dem Loch der Kunststoffmutter an der Führungsschiene fluchten, bevor die selbst schneidende Schraube in die Kunststoffmutter eingedreht wird. Damit wird das Material von Scheinwerfergehäuse und Kunststoffmutter beim Eindrehen der selbst schneidenden Schraube nicht beschädigt und in Folge dessen werden das Scheinwerfergehäuse und die Führungsschiene nicht gegeneinander verzogen. Es kann damit auf herstellungstechnisch sehr einfache, jedoch nichts desto trotz sehr effektive Weise ein konstanter Fugenverlauf zwischen Scheinwerfergehäuse und Karosserie gewährleistet werden.

Vorteilhafte Ausgestaltungen und Weiterbildungen der Erfindung sind Gegenstand der weiteren Unteransprüche sowie der Beschreibung unter Bezugnahme auf die Zeichnungen.

Die Erfindung wird nachfolgend anhand der in den schematischen Figuren der Zeichnung angegebenen Ausführungsbeispielen näher erläutert. Es zeigt dabei:
- Figur 1: eine perspektivische Darstellung eines Scheinwerfergehäuses, welches über eine Führungsschiene an einem Kotflügel befestigt ist;
- Figur 2: eine perspektivische Darstellung der Führungsschiene für ein Scheinwerfergehäuse entsprechend Figur 1, bei der das Scheinwerfergehäuse entfernt ist;
- Figur 3: eine vertikale Querschnittsdarstellung durch das Scheinwerfergehäuse und die Führungsschiene aus Figur 1 im Bereich der Schraube und des Führungsstiftes;
- Figur 4: eine horizontale Querschnittsdarstellung durch das Scheinwerfergehäuse und die Führungsschiene aus Figur 1 im Bereich des Führungsstiftes.

In allen Figuren der Zeichnung sind gleiche oder funktionsgleiche Elemente - sofern nichts anderes angegeben ist - mit denselben Bezugszeichen versehen worden.

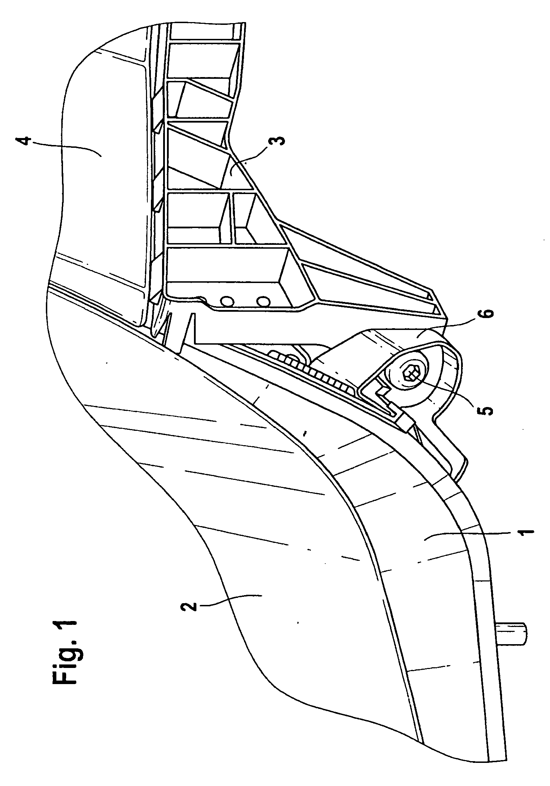

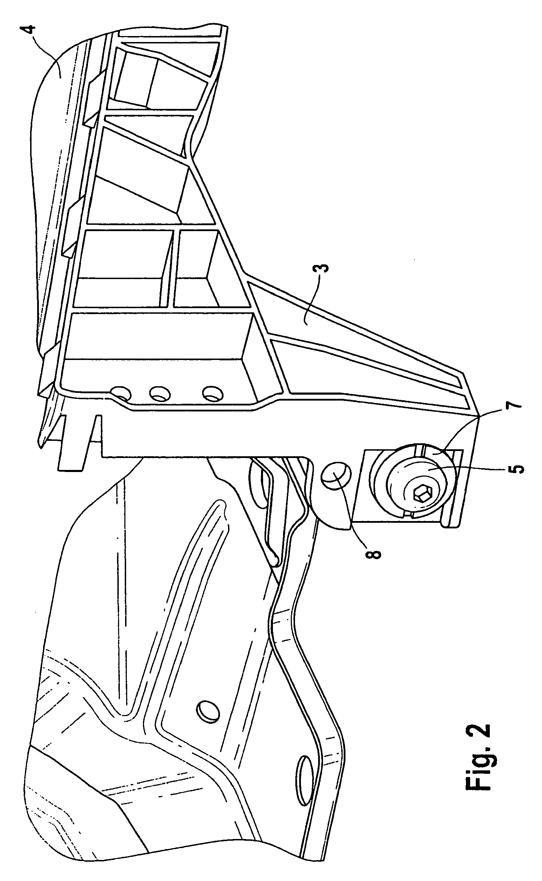

Die Figuren 1 und 2 zeigen jeweils perspektivische Darstellungen einer erfindungsgemäßen Befestigungsvorrichtung für einen Scheinwerfer bzw. dessen Gehäuse. In Figur 1 ist ausschnittsweise ein mit Bezugszeichen 1 bezeichnetes Scheinwerfergehäuse dargestellt. Das Scheinwerfergehäuse 1 umschließt eine ebenfalls ausschnittsweise dargestellte Scheinwerferstreuscheibe 2. Das Scheinwerfergehäuse 1 ist mittels einer erfindungsgemäßen Befestigungsvorrichtung über eine Führungsschiene 3 an einem Kotflügel 4 befestigt. Die Führungsschiene 3 kann beispielsweise aus Kunststoff oder auch aus Metall bestehen. Die Führungsschiene 3 ist über nicht dargestellte Positionierstifte sehr exakt zum Kotflügel ausgerichtet, so dass gegebenenfalls vorhandene Toleranzen zwischen Kotflügel und Führungsschiene vernachlässigbar gering sind. Zur Befestigung des Scheinwerfergehäuses 1 an der Führungsschiene 3 ist eine Befestigungsschraube 5 vorgesehen. Die Befestigungsschraube 5 weist eine selbst schneidende Schraube auf.

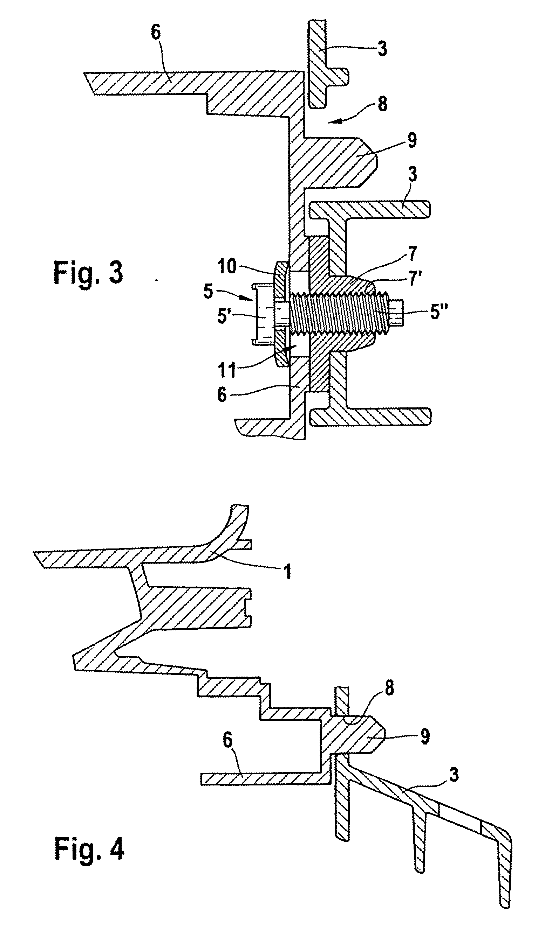

Das Scheinwerfergehäuse 1 weist im Bereich der erfindungsgemäßen Befestigungsvorrichtung eine Anschraublasche 6 auf (siehe Figur 1), die eine Ausnehmung 11 (siehe Figuren 3 und 4) zum Durchstecken der Befestigungsschraube 5 enthält. An der entsprechend gegenüber liegenden Stelle der Führungsschiene 3 ist eine Einsteckmutter 7 vorgesehen. Die Einsteckmutter 7 kann Bestandteil der Führungsschiene 3 sein oder in eine eigens dafür vorgesehene Ausnehmung der Führungsschiene 3 eingesteckt und dort fixiert sein. Beispielsweise kann die Einsteckmutter 7 als Sechskant-Mutter ausgebildet sein und in einer in etwa gleich großen sechskantförmigen Ausnehmung der Führungsschiene 3 verdrehfest eingesteckt sein. Der Kopf 5' der Befestigungsschraube 5 kann direkt am Scheinwerfergehäuse 1 bzw. der Anschraublasche 6 anliegen. Denkbar wäre allerdings auch, dass zwischen der Anschraublasche 6 und dem Kopf der Befestigungsschraube 5 eine Beilagscheibe 10, ein Abstandsring oder ein Federring angeordnet ist (siehe Figur 3).

Erfindungsgemäß weist die Führungsschiene 3 nun eine Ausnehmung 8 in unmittelbarer Nähe zu der Einsteckmutter 7 auf (siehe Figur 2). Ferner ist ein Führungsstift 9 vorgesehen, der im vorliegenden Beispiel am Scheinwerfergehäuse angespritzt ist. Alternativ kann der Führungsstift 9 auch dort in einer entsprechenden Ausnehmung eingesteckt sein. Beim Anschrauben des Scheinwerfergehäuses 1 (siehe Figur 1 und 3) wird der Führungsstift 9 durch das Loch 8 in der Führungsschiene 3 durchgeführt. Dadurch wird gleichermaßen die Ausnehmung 11 in der Anschraublasche 6 und das Loch in der Einsteckmutter 7 passend übereinander gebracht und damit gegeneinander justiert. Die Befestigungsschraube 5 kann damit über die Ausnehmung 11 durchgesteckt werden und in die Einsteckmutter 7 eingedreht werden, ohne dass das Material des Scheinwerfergehäuses 1 seitlich beschädigt würde bzw. ein nicht-axiales Eindrehen der Befestigungsschraube 5 in die Einsteckmutter 7 erfolgt.

Die Figuren 3 und 4 zeigen Querschnittsdarstellungen des Scheinwerfergehäuses 1 und der Führungsschiene 3 im Bereich des Führungsstifts 9 sowie der Befestigungsschraube 5. Dabei zeigt Figur 3 einen vertikalen Schnitt durch die Anordnung in Figur 1, während Figur 4 einen horizontalen Schnitt durch das Scheinwerfergehäuse 1 und die Führungsschiene 3 im Bereich des Führungsstiftes 9 zeigt.

Der linke Teil der Anordnung in Figur 3 zeigt die Anschraublasche 6, der rechte Teil zeigt die Führungsschiene 3. Im unteren Bereich ist die in die Einsteckmutter 7 eingedrehte Befestigungsschraube 5 zu erkennen. Das Gewinde 5" der Befestigungsschraube 5 erzeugt dabei ein Innengewinde 7' in der Einsteckmutter 7. Die Befestigungsschraube 5 weist einen Schraubenkopf 5' auf, der im eingeschraubten Zustand in Anlage mit einer Beilagscheibe 10 gelangt. Die Beilagscheibe 10 ist hier als Federscheibe ausgebildet und wird beim Eindrehen der Befestigungsschraube 5 an die Anschraublasche 6 gepresst, wodurch eine bessere Befestigung zustande kommt. Die Einsteckmutter 7 ist im vorliegenden Beispiel in einer eigens dafür vorgesehenen Öffnung der Führungsschiene 3 eingesteckt worden.

Der Führungsstift 9 greift in ein vertikales Langloch 8, welches in der Führungsschiene 3 vorgesehen ist, ein. Dies ist daher notwendig, da das Scheinwerfergehäuse 1 bereits vorher an einer Befestigung an der Karosserie (bzw. dem Kotflügel) verschraubt wird.

In der Darstellung in Figur 4 ist das Loch 8 für den Führungsstift 9 eng toleriert, um eine möglichst geringe Abweichung zur Seite zu haben.

Der Führungsstift 9 kann wie in den Figuren 3 und 4 dargestellt ist, zylinderförmig ausgebildet sein. Zusätzlich oder alternativ wäre auch denkbar, wenn der Führungsstift 9 kegelstumpfförmig oder pyramidenförmig ausgebildet ist, da damit eine Einführen des Führungsstiftes 9 in das Loch 8 erleichtert wird. Im vorliegenden Ausführungsbeispiel ist der Führungsstift 9 Bestandteil des Scheinwerfergehäuses 1 bzw. der Anschraublasche 6. Denkbar wäre allerdings auch, dass der Führungsstift 9 in eine eigens dafür vorgesehene Ausnehmung der Anschraublasche 6 einsteckbar oder durchsteckbar ist oder auf andere Weise fixiert wird. Eine herstellungstechnisch besonders vorteilhafte Ausgestaltung ergibt sich dann, wenn der Führungsstift 9 einen kreuzförmigen oder sternförmigen Querschnitt aufweist. Dies ist insbesondere spritztechnisch besonders vorteilhaft, da beim und nach dem Anspritzen des Führungsstiftes 9 an die Anschraublasche 6 die gewünschte Form gewährleistet ist. Darüber hinaus weist ein kreuz- oder sternförmig ausgebildeter Führungsstift 9 eine erhöhte Stabilität auf.

Als Befestigungsschraube 5 ist typischerweise eine Stahl- oder Metallschraube vorgesehen, die ein schneidendes Außengewinde aufweist, welches beim Eindrehen in ein weicheres Material, zum Beispiel dem Material der Einsteckmutter 7, dort ein Innengewinde 5' erzeugt. Als Material der Einsteckmutter 7 ist typischerweise ein Kunststoff vorgesehen, der beim Eindrehen der Befestigungsschraube 5 ein Innengewinde 7' ausbildet. In gleicher Weise besteht auch das Scheinwerfergehäuse 1 allein schon aus Gründen der Gewichtseinsparung typischerweise aus Kunststoff.

Obgleich die vorliegende Erfindung vorstehend anhand bevorzugter Ausführungsbeispiele beschrieben wurde, ist sie darauf nicht beschränkt, sondern auf vielfältige Art und Weise modifizierbar.

So sei die Erfindung, wie bereits erwähnt wurde, nicht auf den in den vorstehenden Figuren dargestellten, speziellen Aufbau einer Befestigungsvorrichtung beschränkt. Vielmehr kann eben diese Befestigungsvorrichtung auf beliebige Art und Weise modifiziert werden. Wesentlich ist hier lediglich, dass der Führungsstift sowie das Führungsloch derart miteinander interagieren, dass die selbstschneidende Mutter und die Schraube nicht schief in die Mutter eingeschraubt wird und damit die Gefahr besteht, dass das Gehäuse des Durchgangslochs beschädigt wird.

Auch sei die Erfindung nicht auf eine speziell für Scheinwerfer vorgesehene Befestigungsvorrichtung beschränkt, sondern kann auch bei einer anderen Leuchte in einem Kraftfahrzeug, beispielsweise einer Blinkerleuchte und/oder einem Rücklicht oder ganzen Modulen, die eine Mehrzahl von Leuchten aufweisen, vorteilhaft eingesetzt werden.

Es versteht sich, dass die Führungsschiene und das Führungsloch auch umgekehrt zueinander angeordnet sein können, ohne vom Prinzip der Erfindung abzuweichen. Das Gleiche gilt für die Mutter und die selbstschneidende Schraube. Wo diese angeordnet sind bzw. von welcher Seite diese miteinander verschraubt werden hängt im wesentlichen von dem für die Montage zur Verfügung stehenden Platz ab und von herstellungstechnischen Randbedingungen ab.

Im vorliegenden Ausführungsbeispiel der Figuren 1 - 4 ist das Scheinwerfergehäuse selbst an die Führungsschiene angeschraubt. Denkbar wäre auch, dass eine Halterung für das Scheinwerfergehäuse vorgesehen ist. In diesem Falle würde dann die entsprechende Halterung für das Scheinwerfergehäuse an die Führungsschiene angeschraubt.

Im vorstehenden Ausführungsbeispiel wurde das Scheinwerfergehäuse indirekt über die Führungsschiene am Kotflügel befestigt. Denkbar wäre selbstverständlich auch eine direkte Befestigung des Scheinwerfergehäuses am Kotflügel unter Verwendung der erfindungsgemäßen Befestigungsvorrichtung.

Wenngleich bereits ein Führungsstift zur Justage und Vorzentrierung der Befestigungsschraube und der Einsteckmutter ausreicht, wäre es je nach Anwendung auch denkbar, mehrere Führungsstifte und entsprechende Löcher bereitzustellen. Denkbar wäre ferner, mehrere Befestigungsvorrichtungen für ein Scheinwerfergehäuse mit erfindungsgemäßen Führungsstiften und entsprechenden Löchern auszustatten.

### Bezugszeichenliste

- 1: Scheinwerfergehäuse
- 2: Scheinwerferstreuscheibe
- 3: Führungsschiene
- 4: Karosserieteil, Kotflügel
- 5: Befestigungsschraube
- 5': Kopf der Befestigungsschraube
- 5'': Gewinde der Befestigungsschraube
- 6: Anschraublasche, Gehäusehalterung
- 7: Einsteckmutter, Kunststoffmutter
- 7': Innengewinde der Einsteckmutter
- 8: Ausnehmung in der Führungsschiene, Führungsloch
- 9: Führungsstift
- 10: Beilagscheibe, Abstandsring, Federring
- 11: Ausnehmung in der Gehäusehalterung

## Patentansprüche

1. Befestigungsvorrichtung zur Befestigung einer Leuchtenanordnung an einem Karosserieteil (4) eines Kraftfahrzeugs,
mit einer Gehäusehalterung (6) zum Halten und Ausrichten eines Gehäuses (1) der Leuchtenanordnung,
mit mindestens einer Führungsschiene (3), die an dem Karosserieteil (4) befestigt ist, an der die Gehäusehalterung (6) befestigt und ausgerichtet ist,
mit mindestens einer Mutter (7) und jeweils eine in das Material der Mutter (7) selbst schneidende Schraube (5) zur Befestigung der Gehäusehalterung (6) mit der Führungsschiene (3),
mit mindestens einem an der Gehäusehalterung (6) oder an der Führungsschiene (3) angeordneten Führungsstift (9) und einem an der Führungsschiene (3) bzw. der Gehäusehalterung (6) vorgesehenen Führungsloch (8) zum Einführen des Führungsstifts (9) und zum gegenseitigen Ausrichtung von Mutter (7) und Schraube (5).

2. Befestigungsvorrichtung nach Anspruch 1,
**dadurch gekennzeichnet,**
**dass** die Mutter (7) eine erste Ausnehmung für ein Innengewinde (7') aufweist und eine zweite Ausnehmung (11) in einem gegenüberliegenden Teil der Gehäusehalterung (6) bzw. der Führungsschiene (3) vorgesehen ist, wobei für den Fall, dass der Führungsstift (9) in das Führungsloch (8) eingeführt ist, die erste und die zweite Ausnehmung (11) konzentrisch übereinander liegend angeordnet sind.

3. Befestigungsvorrichtung nach einem der vorstehenden Ansprüche,
**dadurch gekennzeichnet,**
**dass** die Mutter (7) verdrehfest in einer dritten Ausnehmung der Führungsschiene (3) oder der Gehäusehalterung (6) angeordnet ist.

4. Befestigungsvorrichtung nach einem der Ansprüche 1 oder 2,
**dadurch gekennzeichnet,**
**dass** die Mutter (7) Bestandteil der Führungsschiene (3) oder der Gehäusehalterung (6) ist.

5. Befestigungsvorrichtung nach einem der vorstehenden Ansprüche,
**dadurch gekennzeichnet,**
**dass** sich der Führungsstift (9) in Richtung des Führungslochs (8) verjüngt.

6. Befestigungsvorrichtung nach einem der vorstehenden Ansprüche,
**dadurch gekennzeichnet,**
**dass** der Führungsstift (9) einen stern- oder kreuzförmigen Querschnitt aufweist.

7. Befestigungsvorrichtung nach einem der vorstehenden Ansprüche,
**dadurch gekennzeichnet,**
**dass** der Führungsstift (9) an der Gehäusehalterung (6) angeordnet ist und das Führungsloch (8) in der entsprechend gegenüber liegenden Stelle der Führungsschiene (3) vorgesehen ist.

8. Befestigungsvorrichtung nach einem der vorstehenden Ansprüche,
**dadurch gekennzeichnet,**
**dass** die Mutter (7) zumindest im Bereich der ersten Ausnehmung ein Kunststoff-Material oder ein Kunststoff enthaltendes Material aufweist, das derart weich beschaffen ist, dass es beim Eindrehen der Schraube (5) ein Innengewinde (7') ausbildet.

9. Befestigungsvorrichtung nach einem der vorstehenden Ansprüche,
**dadurch gekennzeichnet,**
**dass** die Gehäusehalterung (6) Bestandteil des Gehäuses (1) der Leuchtenanordnung ist.

10. Leuchtenanordnung für oder in einem Kraftfahrzeug,
mit mindestens einem Scheinwerfer und/oder einer Leuchte, die jeweils ein Gehäusehalterung (6) aufweisen,
mit mindestens einer Befestigungsvorrichtung (5, 6, 7, 8, 9, 10, 11) nach einem der vorstehenden Ansprüche,
mit mindestens einer weiteren Befestigungsvorrichtung, mittels der die Gehäusehalterung (6) direkt an einem Karoserieteil (4), insbesondere einem Kotflügel (4), und/oder einem Karoserieanbauteil, insbesondere einem Stossfänger, befestigt ist.

## Claims

1. Fastening device for fastening a light arrangement to a body part (4) of a motor vehicle,
having a casing holder (6) for holding and aligning a casing (1) of the light arrangement,
having at least one guide rail (3), which is fastened to the body part (4) and on which the casing holder (6) is fastened and aligned,
having at least one nut (7) and in each case a screw (5) self-tapping into the material of the nut (7) for fastening the casing holder (6) to the guide rail (3),
having at least one guide pin (9) disposed on the casing holder (6) or on the guide rail (3) as well as a guide hole (8) provided in the guide rail (3) or in the casing holder (6) respectively for introducing the guide pin (9) and for the mutual alignment of nut (7) and screw (5).

2. Fastening device according to claim 1,
**characterized in**
**that** the nut (7) has a first recess for an internal thread (7') and a second recess (11) is provided in an opposed part of the casing holder (6) or guide rail (3), wherein, for the eventuality that the guide pin (9) is introduced into the guide hole (8), the first and the second recess (11) are disposed lying concentrically one over the other.

3. Fastening device according to one of the preceding claims,
**characterized in**
**that** the nut (7) is disposed locked against rotation in a third recess of the guide rail (3) or of the casing holder (6).

4. Fastening device according to one of claims 1 or 2,
**characterized in**
**that** the nut (7) is a component part of the guide rail (3) or of the casing holder (6).

5. Fastening device according to one of the preceding claims,
**characterized in**
**that** the guide pin (9) tapers in the direction of the guide hole (8).

6. Fastening device according to one of the preceding claims,
**characterized in**
**that** the guide pin (9) has a star- or cross-shaped cross section.

7. Fastening device according to one of the preceding claims,
**characterized in**
**that** the guide pin (9) is disposed on the casing holder (6) and the guide hole (8) is provided in the correspondingly opposite point of the guide rail (3).

8. Fastening device according to one of the preceding claims,
**characterized in**
**that** the nut (7) at least in the region of the first recess comprises a plastics material or a material containing plastics material, which is of such a soft quality that it forms an internal thread (7') when the screw (5) is screwed in.

9. Fastening device according to one of the preceding claims,
**characterized in**
**that** the casing holder (6) is a component part of the casing (1) of the light arrangement.

10. Light arrangement for or in a motor vehicle,
having at least one headlamp and/or light, which comprise in each case a casing holder (6),
having at least one fastening device (5, 6, 7, 8, 9, 10, 11) according to one of the preceding claims,
having at least one further fastening device, by means of which the casing holder (6) is fastened directly to a body part (4), in particular a wing (4), and/or to a part mounted on the body, in particular a bumper.

## Revendications

1. Dispositif de fixation pour fixer un système d'éclairage sur un élément de carrosserie (4) d'un véhicule automobile,
- avec une attache de boîtier (6) pour maintenir et pour aligner un boîtier (1) du système d'éclairage,
- avec au moins une glissière de guidage (3), qui est fixée sur l'élément de carrosserie (4), sur laquelle l'attache de boîtier (6) est fixée et alignée,
- avec au moins un écrou (7) et respectivement une vis auto-taraudeuse (5) dans la matière de l'écrou (7) pour la fixation de l'attache du boîtier (6) sur la glissière (3),
- avec au moins un goujon de guidage (9) disposé sur l'attache de boîtier (6) ou sur la glissière (3) et avec un trou de guidage (8) prévu sur la glissière (3) ou sur l'attache de boîtier (6), pour l'introduction du goujon de guidage (9) et pour l'alignement réciproque de l'écrou (7) et de la vis (5).

2. Dispositif de fixation selon la revendication 1, **caractérisé en ce que** l'écrou (7) comporte un premier évidement pour un taraudage (7') et **en ce qu'**un deuxième évidement (11) est prévu dans une partie opposée de l'attache de boîtier (6) ou de la glissière (3), dans le cas où le goujon de guidage (9) est introduit dans le trou de guidage (8), le premier et le deuxième évidement (11) étant superposés de façon concentrique.

3. Dispositif de fixation selon l'une quelconque des revendications précédentes, **caractérisé en ce que** l'écrou (7) est disposé de façon bloquée en rotation dans un troisième évidement de la glissière (3) ou de l'attache de boîtier (6).

4. Dispositif de fixation selon l'une quelconque des revendications 1 ou 2, **caractérisé en ce que** l'écrou (7) est partie intégrante de la glissière (3) ou de l'attache de boîtier (6).

5. Dispositif de fixation selon l'une quelconque des revendications précédentes, **caractérisé en ce que** le goujon de guidage (9) se rétrécit en direction du trou de guidage (8).

6. Dispositif de fixation selon l'une quelconque des revendications précédentes, **caractérisé en ce que** le goujon de guidage (9) présente un section transversale en forme d'étoile ou de croix.

7. Dispositif de fixation selon l'une quelconque des revendications précédentes, **caractérisé en ce que** le goujon de guidage (9) est disposé sur l'attache de boîtier (6) et **en ce que** le trou de guidage (8) est prévu sur l'endroit opposé correspondant de la glissière (3).

8. Dispositif de fixation selon l'une quelconque des revendications précédentes, **caractérisé en ce que** l'écrou (7) comporte au moins dans la zone du premier évidement une matière plastique ou une matière contenant une matière plastique, qui est constituée de sorte à former un taraudage (7') lors du vissage de la vis (5).

9. Dispositif de fixation selon l'une quelconque des revendications précédentes, **caractérisé en ce que** l'attache de boîtier (6) est une partie intégrante du boîtier (1) du système d'éclairage.

10. Système d'éclairage pour ou dans un véhicule automobile,
- avec au moins un phare et/ou un éclairage, comportant chacun une attache de boîtier (6), avec au moins un dispositif de fixation (5, 6, 7, 8, 9, 10, 11) selon l'une quelconque des revendications précédentes,
- avec au moins un dispositif de fixation supplémentaire au moyen duquel l'attache de boîtier (6) est fixée directement sur un élément de carrosserie (4), notamment sur une aile arrière (4) et/ou sur un élément rapporté de la carrosserie, notamment sur un pare-chocs.
